**Europäisches Patentamt**

(19) **European Patent Office**

**Office européen des brevets**

(11) Veröffentlichungsnummer : **0 373 398 B1**

# (12) EUROPÄISCHE PATENTSCHRIFT

(45) Veröffentlichungstag der Patentschrift :
**02.10.91 Patentblatt 91/40**

(51) Int. Cl.$^5$ : **B60B 33/02**

(21) Anmeldenummer : **89121636.8**

(22) Anmeldetag : **23.11.89**

(54) Fahrrolle zur Befestigung an Transportwagen, insbesondere an Einkaufswagen.

(30) Priorität : **10.12.88 DE 3841697**

(43) Veröffentlichungstag der Anmeldung :
**20.06.90 Patentblatt 90/25**

(45) Bekanntmachung des Hinweises auf die
Patenterteilung :
**02.10.91 Patentblatt 91/40**

(84) Benannte Vertragsstaaten :
**AT CH DE FR GB IT LI NL SE**

(56) Entgegenhaltungen :
**DE-U- 8 524 579**
**US-A- 3 608 693**

(73) Patentinhaber : **WANZL**
**METALLWARENFABRIK GMBH**
**Postfach 1129**
**W-8874 Leipheim (DE)**

(72) Erfinder : **Ertle, Karl**
**Pfarrsteig 19**
**W-7907 Langenau (DE)**
Erfinder : **Wanzl, Rudolf**
**Sonnenweg 8**
**W-8874 Leipheim (DE)**

EP 0 373 398 B1

## Beschreibung

Die Erfindung betrifft eine zur Befestigung an Transportwagen, insbesondere an Einkaufswagen bestimmte Fahrrolle, die ein zwischen einer Gabel geführtes und auf einer Radachse gelagertes Laufrad aufweist und die mit einem zum Eintauchen in die Längsrillen eines Fahrsteigbandes oder von Rolltreppenstufen bestimmtes Fühlerrad ausgestattet ist, das aus einer vertikalbeweglichen Nabe und einem Laufring besteht, der mit Hilfe eines Rollenlagers auf der Nabe drehbeweglich gelagert ist und das Fühlerrad durch eine Druckfederanordnung konstant gegen den Fußboden gedrückt wird und bei der durch das Eintauchen des Fühlerrades in die Längsrillen durch Verrastung des Fühlerrades mit dem Laufrad eine selbsttätige Arretierung des Laufrades erfolgt.

Fahrrollen dieser Art finden insbesondere bei Einkaufswagen Verwendung, die in Selbstbedienungsmärkten auf einem Fahrsteig oder auf einer Rolltreppe von einem Stockwerk zum nächsten transportiert werden sollen. Diese Fahrrollen besitzen die Eigenschaft, daß ihre Laufräder dann selbsttätig arretiert werden, wenn sich die Fahrrollen auf einem Fahrsteig oder auf einer Rolltreppe befinden. Durch diese Eigenschaft wird in sicherer Weise ein unbeabsichtigtes Fahren oder Bewegen von Transportwagen, die sich auf derartigen Fördereinrichtungen befinden, verhindert.

Typische Vertreter dieser Fahrrollengattung sind in den deutschen Patentschriften 1780490 und 2105547 näher beschrieben. Zum nächstliegenden Stand der Technik zählt die zuletzt genannte Schrift, durch die eine Fahrrolle vorgestellt wird, bei der sich das Fühlerrad aus einer vertikalbeweglichen Nabe und aus einem Laufring zusammensetzt, der mittels eines Rollenlagers in Form eines relativ großen Kugelkranzes auf der Nabe um eine waagrechte Achse drehbar gelagert ist. Innerhalb der Nabe ist ein Langloch angeordnet, in dem sich eine zylindrische, die Laufradachse aufnehmende Buchse befindet. In dem zwischen der Buchse und dem Langlochende gebildeten Zwischenraum ist eine Druckfeder eingesetzt, so daß die Nabe und damit die Tastscheibe, obwohl die Laufradachse die Buchse durchdringt, rechtwinklig zur Laufradachse eine begrenzte Wegstrecke bewegbar ist. Damit diese Bewegbarkeit trotz der zylindrischen Form von Buchse und Laufradachse in eine vertikale Richtung festlegbar ist, weist die Nabe einen zu einem Gabelschenkel gerichteten Vorsprung auf, der in einem senkrecht verlaufenden, im Gabelschenkel befindlichen Durchbruch schiebebeweglich geführt ist. Auf gleicher Höhe mit dem eben erwähnten Vorsprung ist an der Nabe ein zur entgegengesetzten Seite ragender Vorsprung angeordnet, der zum Eingriff in einen am Laufrad befindlichen Lochkranz dann bestimmt ist, wenn das Fühlerrad in die Längsrillen, beispielsweise eines Fahrsteigbandes eintaucht. Durch den Eingriff des zuletzt genannten Vorsprunges in den Lochkranz des Laufrades wird eine Arretierung des Laufrades erzielt.

Nachteilig sind bei dieser Fahrrolle die nach einer gewissen Betriebsdauer auftretenden lästigen Rollgeräusche des Fühlerrades. Diese Rollgeräusche entstehen dadurch, daß die im Kugelkranz befindlichen, lose eingelegten Stahlkugeln teilweise auf einer metallischen Bahn laufen und diese Bahn aufgrund des relativ großen Durchmessers des Kugelkranzes sehr lang ist. Obwohl der Kugelkranz beim Einbau in das Fühlerrad gefettet wird, verbraucht sich dieses Fett aufgrund wetterbedingter Einflüsse relativ rasch und da keine Nachschmiermöglichkeit besteht, entwickeln sich aufgrund der trockenen Bahn beim Einsatz dieser Fahrrollen die vorab beschriebenen Rollgeräusche. Bei der Vielzahl von Einkaufswagen, die heute in den Großmärkten Verwendung finden, führen solche Fahrrollen zwangsläufig zu einem Anheben des allgemeinen Geräuschpegels in den Märkten.

Ein weiterer Nachteil kann darin gesehen werden, daß sich der in den Durchbruch des Gabelschenkels ragende metallische Vorsprung an den metallischen Flächen des Gabelschenkels reibt, was nach und nach zur Zerstörung der verzinkten Oberfläche von Vorsprung und Gabelschenkel führt und ein Rosten der metallischen Flächen begünstigt.

Unabhängig vom zuletzt genannten Nachteil besteht die Aufgabe der Erfindung darin, die Bauteile bei einer gattungsgemäßen Fahrrolle so anzuordnen, daß durch das Fühlerrad verursachte Rollgeräusche weitgehendst vermieden werden.

Die Lösung der gestellten Aufgabe besteht darin, daß die Druckfederanordnung in einem seitlichen Abstand zum Rollenlager des Fühlerrades angeordnet ist.

Bei den bisher bekannten Fahrrollen war die Druckfederanordnung immer zentral zum Laufring innerhalb des vom Rollenlager umschlossenen Raumes untergebracht. Dadurch mußte das Rollenlager zwangsläufig einen großen Durchmesser erhalten. Durch das vorteilhafte Anbringen der Druckfederanordnung seitlich vom Rollenlager kann nun der Durchmesser des Rollenlagers wesentlich verkleinert werden, was bereits bei einem Rollenlager, das lose eingelegte Stahlkugeln aufweist, zu einer gewissen Geräuschminderung führt. Besser ist es jedoch, anstelle des vorab genannten Rollenlagers ein genormtes und beidseitig abgedichtetes Rillenkugellager zu verwenden, das aufgrund seines geringen Durchmessers auch relativ schmal gebaut ist. Dadurch kann die Breite des Fühlerrades ebenfalls schmal gehalten werden, da die Rillenbreite bei Fahrsteigbändern oder Rolltreppenstufen ohnehin höchstens nur 6,7 mm beträgt. Da in das beidseitig abgedichtete Rillenkugellager keine Schmutzflüssigkeiten oder Staub eindringen können, kommt es auch nach längerer Betriebsdauer zu keinem Trockenlauf der im Rillenkugellager befindlichen Kugeln. Das Fühlerrad entwikkelt deshalb auch nach langem Einsatz keine lästigen Rollgeräusche. Auch die Lebensdauer solcher Fühlerräder wird durch die vorgeschlagene Lösung wesentlich erhöht.

Ein weiterer Vorteil ergibt sich dann, wenn man sich entschließt, die Vertikalbeweglichkeit der Nabe nicht über einen Gabelschenkel, sondern zwischen jenen Teilen direkt herzustellen, welche den Laufring und das Laufrad tragen. Dadurch, daß die das Laufrad tragende Lagerbuchse verdrehsicher auf der Radachse gelagert und mit senkrecht angeordneten Führungsflächen ausgestattet ist, die mit senkrechten Anlageflächen der Nabe korrespondieren, vermeidet man den eingangs erwähnten Durchbruch in einem der beiden Gabelschenkel.

In zweckmäßiger Weise ist ferner die Druckfederanordnung zwischen dem Laufrad und dem Fühlerrad in einer zylinderförmigen Aussparung des Laufrades untergebracht. Dadurch kann die Baubreite der erfindungsgemäßen Fahrrolle äußerst schmal gehalten werden.

Die Erfindung wird anhand eines Ausführungsbeispieles näher erläutert. Es zeigt

Fig. 1        im Schnitt eine Fahrrolle auf ebenem Boden ;
Fig. 2        die Fahrrolle gemäß Fig. 1 auf einem Transportband mit eingetauchtem Fühlerrad sowie die
Fig. 3 bis 7  Einzelansichten der Lagerbuchse und der Nabe.

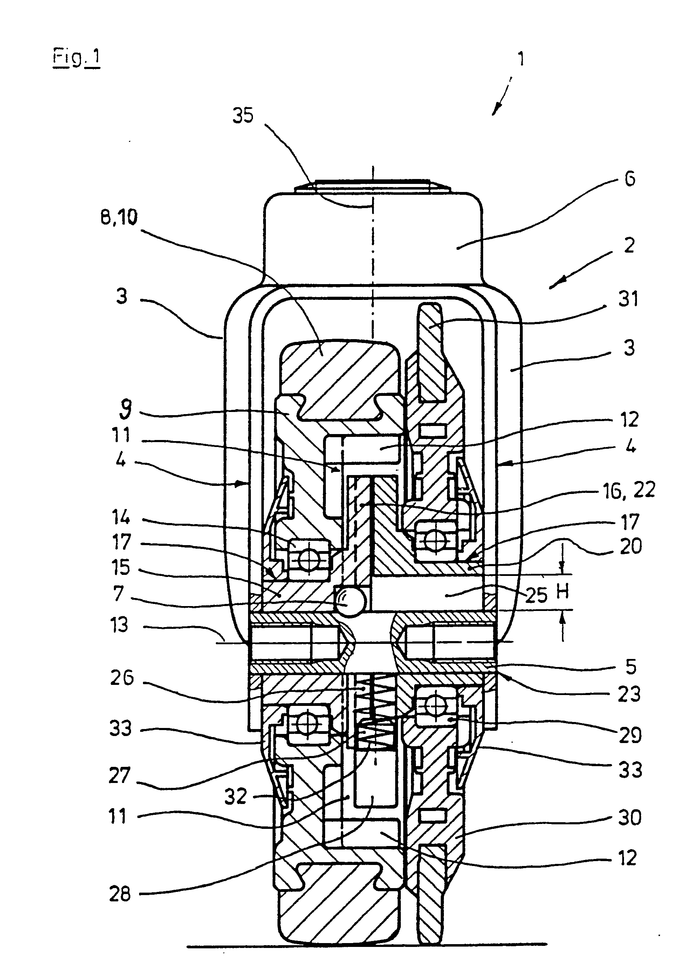

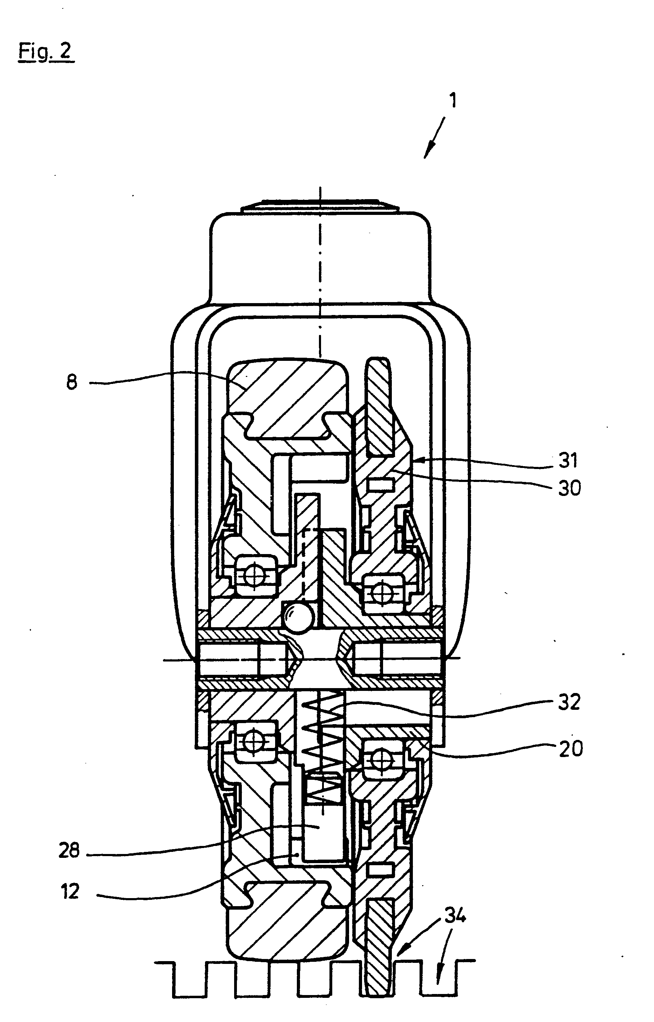

Die in den Zeichnungen Fig. 1 und 2 dargestellte Fahrrolle 1 besteht aus einer Gabel 2, die an ihrem oberen Ende mit einer um eine vertikale Achse 35 bewegbaren Schwenklageranordnung 6 ausgestattet ist. Die Fahrrolle 1 läßt sich somit als Lenkrolle verwenden. Die Fahrrolle 1 kann aber auch als sog. "Bockrolle" gestaltet sein, bei der auf die Schwenklageranordnung 6 verzichtet wird. Zwischen den Gabelschenkeln 3 der Gabel 2 befindet sich ein Laufrad 8 und ein Fühlerrad 31. Das Laufrad 8 besitzt einen Radkörper 9 und einen Laufring 10. Im Radkörper 9 ist ein Rollenlager 14 in Form eines handelsüblichen, beidseitig abgedichteten Rillenkugellagers verschiebesicher eingesetzt. Das Rollenlager 14 ist auf eine Lagerbuchse 15 aufgesetzt, die verdrehsicher auf der Radachse 5 angeordnet ist. Zu diesem Zweck ist die Radachse 5 in ihrer Querschnittsform unrund, bevorzugt mit zwei senkrechten Flächen oder als Vierkantachse gestaltet. Die Radachse 5 durchmißt die Strecke zwischen den beiden außen sichtbaren Flächen 4 der Gabelschenkel 3. Sie (5) ist in den Gabelschenkeln 3 verdrehsicher gehalten. Zwei von den Stirnseiten der Radachse 5 ausgehende Gewindebohrungen erlauben es, daß die Radachse 5 mit üblichen Befestigungsmitteln an den Gabelschenkeln 3 befestigt werden kann. Auf der Radachse 5 ist ein Anschlag 7 vorgesehen, so daß die Lagerbuchse 15 in montiertem Zustand der Fahrrolle 1 zwischen dem Anschlag 7 und dem in der Zeichnung links befindlichen Gabelschenkel 3 ortsfest fixiert ist. Der Radkörper 9 weist eine zylinderförmige Aussparung 11 auf, deren waagrechte Achse identisch ist mit der waagrechten Achse 13 des Laufrades 8. Innerhalb der zylinderförmigen Aussparung 11 sind zwei senkrechte Führungsflächen 16 untergebracht, die der Lagerbuchse 15 angehören. Mit den Führungsflächen 16 korrespondieren zwei Anlageflächen 22, die an einer Nabe 20 angeordnet sind. Die Nabe 20 besitzt ebenso wie die Lagerbuchse 15 einen zylindrischen Abschnitt 17, der ein Rollenlager 29 in Form eines bevorzugt beidseitig abgedichteten Rillenkugellagers trägt. Das Rollenlager 29 ist ortsfest in einem Laufring 30 eingefügt, der an seinem Umfang so gestaltet ist, daß er in bekannter Weise in eine Längsrille 34 eines Transportbandes oder einer Rolltreppenstufe eintauchbar ist. Die Nabe 20 mit dem Rollenlager 29 und der Laufring 30 bilden zusammen das Fühlerrad 31, das mit Spiel zwischen der Lagerbuchse 15 und einer der beiden an die Gabelschenkel 3 anschließenden Fadenschutzscheiben 33 eingefügt ist. Unterhalb der Anlageflächen 22 und in einem seitlichen Abstand zum Rollenlager 29 ist in der Nabe 20 eine Aussparung 26 vorgesehen, die einen Zapfen 27 aufweist, auf dem eine Druckfederanordnung 32 in Form einer üblichen Zylinderdruckfeder angeordnet ist. Die Druckfederanordnung 32 befindet sich also zwischen dem Laufrad 8 und dem Laufring 30. Unterhalb des Zapfens 27 schließt eine Nocke 28 an, die zum Eingriff in eine am Innenumfang der zylindrischen Aussparung 11 angeordnete kreisringförmige rastenartige Verzahnung 12 bestimmt ist. Die Nabe 20 ist mit zwei vertikalen Seitenflächen 23 an der im Beispiel einen quadratischen Querschnitt aufweisenden Radachse 5 geführt. In der Zeichnung erkennt man oberhalb der Radachse 5 in der Nabe 20 einen Zwischenraum 25. Da sich die Druckfederanordnung 32 sowohl an der Nabe 20, als auch an der ortsfesten Radachse 5 unter Vorspannung abstützt, wird das Fühlerrad 31 gegen den Fußboden gepreßt. Hebt man die Fahrrolle 1 vom Boden ab, dann bewegt sich das Fühlerrad 31 um die Höhe H des Zwischenraumes 25 nach unten.

Fig. 2 zeigt die Fahrrolle 1 in jener Lage, bei der das Fühlerrad 31 in eine Längsrille 34 eines Transportbandes oder einer Rolltreppenstufe eingetaucht ist. Da das Fühlerrad 31 mit Spiel zu den seitlich angrenzenden Teilen gelagert ist, kann die Nabe 20 mit dem jederzeit drehbaren Laufring 30 und damit das Fühlerrad 31 eine Vertikalbewegung ausführen. Das Fühlerrad 31 wird durch die Druckfederanordnung 32 nach unten gedrückt

3

und die an der Nabe 20 befindliche Nocke 28 rastet in die Verzahnung 12 des Laufrades 8 ein, was zur gegenseitigen Versperrung von Nabe 20 und Laufrad 8 und somit zur Arretierung des Laufrades 8 führt. Verläßt die Fahrrolle 1 das Transportband bzw. die Rolltreppenstufe wieder so drückt der am Ende dieser Förderelemente befindliche Kamm das Fühlerrad 31 wieder nach oben, die Versperrung von Nabe 20 und Laufrad 8 wird gelöst und das Laufrad 8 kann sich wieder drehen.

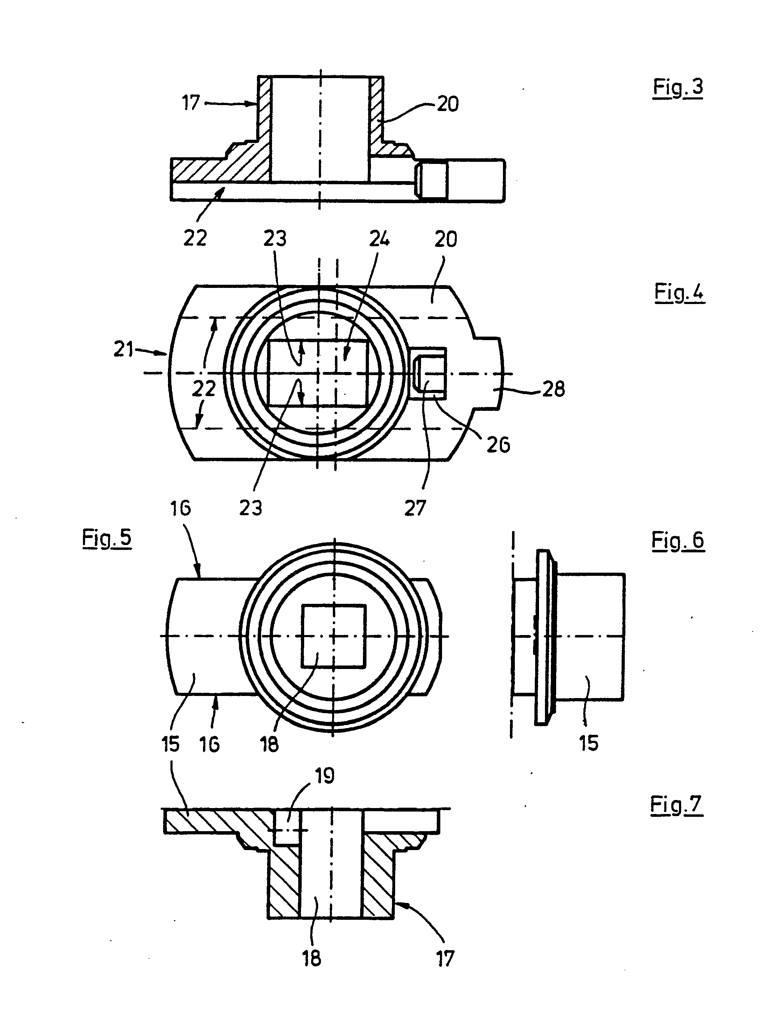

Ergänzend werden in den Figuren 3 bis 7 die Lagerbuchse 15 und die Nabe 20 gezeigt. Man erkennt in den Zeichnungen den quadratischen Durchbruch 18 der Lagerbuchse 15 durch den die Lagerbuchse 15 verdrehsicher auf der Radachse 5 gehalten werden kann. Ersichtlich ist auch der zylindrische Abschnitt 17 sowohl der Lagerbuchse 15, als auch der Nabe 20. Der Einschnitt 19 an der Lagerbuchse 15 dient als Anschlagfläche zur Anlage an den auf der Radachse 5 befindlichen Anschlag 7.

Bei der Nabe 20 erkennt man den rechteckförmigen Durchbruch 24, der um das Maß H höher ist, als der quadratische Durchbruch 18 der Lagerbuchse 15. Aus der Zeichnung läßt sich auch die Lage der Aussparung 26 entnehmen, in welcher sich der Zapfen 27 zur Aufnahme der Druckfederanordnung 32 befindet. Nach unten schließt die Nabe 20 mit dem Nocken 28 ab, der in die ringförmige Verzahnung 12 des Laufrades 8 eingreift. Durch eine an der Rückseite angeordneten Nut 21 werden an der Nabe 20 die beiden senkrechten Anlageflächen 22 geschaffen, die zur Anlage an die senkrecht angeordneten Führungsflächen 16 der Lagerbuchse 15 bestimmt sind, (in der Zeichnung sind die beiden Teile aus Platzgründen quer dargestellt). Die Lagerbuchse 15 und die Nabe 20 können durch die Führungsflächen 16 und die Anlageflächen 22 miteinander in Eingriff gebracht und auf einer gemeinsamen Ebene gegenseitig verschoben werden.

Die vorliegende Beschreibung hat sich auf ein Ausführungsbeispiel konzentriert, bei dem die Nabe 20 durch Eingriff in die Lagerbuchse 15 vertikalbeweglich verschiebbar ist. Die Erfindung läßt sich genauso auf jene bereits bekannte Ausführung übertragen, bei dem die Nabe durch Eingriff in einen an einem Gabelschenkel 3 befindlichen Durchbruch vertikalbeweglich führbar ist. In diesem Falle entfällt die gegenseitige Führung von Lagerbuchse 15 und Nabe 20, wobei aber trotzdem die Druckfedereinrichtung 32 in einem seitlichen Abstand zum Rollenlager 29 der Nabe 20 angeordnet ist.

**Patentansprüche**

1. Fahrrolle für Transportwagen, insbesondere für Einkaufswagen, die ein zwischen einer Gabel geführtes und auf einer Radachse gelagertes Laufrad aufweist und die mit einem zum Eintauchen in die Längsrillen eines Fahrsteigbandes oder von Rolltreppenstufen bestimmtes Fühlerrad ausgestattet ist, dessen Durchmesser mindestens dem des Laufrades entspricht, und das aus einer vertikalbeweglichen Nabe und einem Laufring besteht, der mit Hilfe eines Rollenlagers auf der Nabe drehbeweglich gelagert ist und das Fühlerrad durch eine Druckfederanordnung konstant gegen den Fußboden gedrückt wird und bei der durch das Eintauchen des Fühlerrades in die Längsrillen durch Verrastung des Fühlerrades mit dem Laufrad eine selbsttätige Arretierung des Laufrades erfolgt, dadurch **gekennzeichnet**, daß die Druckfederanordnung (32) in einem seitlichen Abstand zum Rollenlager (29) des Fühlerrades (31) angeordnet ist.

2. Fahrrolle nach Anspruch 1, dadurch **gekennzeichnet**, daß das Rollenlager (29) durch ein beidseitig abgedichtetes Rillenkugellager gebildet ist.

3. Fahrrolle nach Anspruch 1 oder 2, dadurch **gekennzeichnet**, daß das Laufrad (8) auf einer Lagerbuchse (15) gelagert ist, die verdrehsicher auf der Radachse (5) angeordnet ist und die Lagerbuchse (15) senkrechte Führungsflächen (16) aufweist, welche zur vertikalbeweglichen Führung der Nabe (20) vorgesehen sind.

4. Fahrrolle nach einem der Ansprüche 1 bis 3, dadurch **gekennzeichnet**, daß die Radachse (5) wenigstens zwei senkrechte Flächen zur verdrehsicheren Aufnahme der Lagerbuchse (15) und der Nabe (20) aufweist.

5. Fahrrolle nach einem der Ansprüche 1 bis 4, dadurch **gekennzeichnet**, daß die Radachse (5) einen quadratischen Querschnitt besitzt.

6. Fahrrolle nach einem der Ansprüche 1 bis 5, dadurch **gekennzeichnet**, daß die Lagerbuchse (15) auf der Radachse (5) zwischen einem Gabelschenkel (3) und einem an der Radachse (5) befindlichen Anschlag (7) ortsfest fixiert ist.

7. Fahrrolle nach einem der Ansprüche 1 bis 6, dadurch **gekennzeichnet**, daß der Radkörper (9) des Laufrades (8) eine zylindrische Aussparung (11) zur Aufnahme eines Teils der Lagerbuchse (15) und der Nabe (20) aufweist.

8. Fahrrolle nach einem der Ansprüche 1 bis 7, dadurch **gekennzeichnet**, daß sich die Druckfederanordnung (32) zwischen dem Laufrad (8) und dem Laufring (30) befindet.

9. Fahrrolle nach einem der Ansprüche 1 bis 8, dadurch **gekennzeichnet**, daß die Druckfederanordnung (32) auf einem an der Nabe (20) angeordneten Zapfen (27) aufgesetzt ist.

10. Fahrrolle nach einem der Ansprüche 1 bis 9, dadurch **gekennzeichnet,** daß sich die Druckfederanordnung (32) unmittelbar auf der Radachse (5) abstützt.

11. Fahrrolle nach einem der Ansprüche 1 bis 10, dadurch **gekennzeichnet,** daß an der Nabe (20) senkrechte Anlageflächen (22) vorgesehen sind, die zur Anlage an die Führungsflächen (16) der Lagerbuchse (15) bestimmt sind.

12. Fahrrolle nach Anspruch 11, dadurch **gekennzeichnet,** daß die Anlageflächen (22) an der Nabe (20) Bestandteil einer Nut (21) sind.

13. Fahrrolle nach Anspruch 1 oder 2, dadurch **gekennzeichnet,** daß die Nabe (20) in an sich bekannter Weise durch Eingriff in einen am Gabelschenkel (3) befindlichen Durchbruch vertikalbeweglich geführt ist.

## Claims

1. Castor wheel for transportation vehicles, particularly for shopping trolleys, which has a running wheel guided between a fork and mounted on a wheel axle, and which is equipped with a sensor wheel intended for insertion into the longitudinal grooves of an ascending conveyor belt or escalator steps, the diameter of which corresponds at least to that of the running wheel, and which consists of a vertically mobile hub and a bearing race mounted, capable of rotary movement, on the hub by means of a roller bearing and the sensor wheel is constantly pressed against the floor by a compression spring arrangement and wherein insertion of the sensor wheel into the longitudinal grooves causes the running wheel to be automatically arrested by the locking of the sensor wheel with the running wheel, characterised in that the compression spring arrangement (32) is arranged so as to be spaced laterally from the roller bearing (29) of the sensor wheel (31).

2. Castor wheel according to claim 1, characterised in that the roller bearing (29) is formed by a grooved ball bearing sealed on both sides.

3. Castor wheel according to claim 1 or 2, characterised in that the running wheel (8) is mounted on a bearing bush (15) arranged secure against torsion on the wheel axle (5) and the bearing bush (15) has perpendicular guide surfaces (16) which are provided for guiding the hub (20) in a vertically mobile manner.

4. Castor wheel according to one of claims 1 to 3, characterised in that the wheel axle (5) has at least two perpendicular surfaces for the accommodation, secure against torsion, of the bearing bush (15) and the hub (20).

5. Castor wheel according to one of claims 1 to 4, characterised in that the wheel axle (5) has a square cross-section.

6. Castor wheel according to one of claims 1 to 5, characterised in that the bearing bush (15) is stationarily fixed on the wheel axle (5) between one arm (3) of the fork and a stop (7) located on the wheel axle (5).

7. Castor wheel according to one of claims 1 to 6, characterised in that the wheel body (9) of the running wheel (8) has a cylindrical recess (11) for accommodating a part of the bearing bush (15) and the hub (20).

8. Castor wheel according to one of claims 1 to 7, characterised in that the compression spring arrangement (32) is located between the running wheel (8) and the bearing race (30).

9. Castor wheel according to one of claims 1 to 8, characterised in that the compression spring arrangement (32) is mounted on a pin (27) arranged on the hub (20).

10. Castor wheel according to one of claims 1 to 9, characterised in that the compression spring arrangement (32) is supported directly on the wheel axle (5).

11. Castor wheel according to one of claims 1 to 10, characterised in that perpendicular contact surfaces (22) are provided on the hub (20) which are intended to rest against the guide surfaces (16) of the bearing bush (15).

12. Castor wheel according to claim 11, characterised in that the contact surfaces (22) on the hub (20) are component parts of a groove (21).

13. Castor wheel according to claim 1 or 2, characterised in that the hub (20) is guided in a manner known per se so as to be vertically mobile by engagement into an opening located on the arm (3) of the fork.

## Revendications

1. Ensemble de roulement pour des chariots de transport, notamment pour des chariots à provisions, qui présente une roue de roulement guidée dans une fourche et montée sur un axe de roue, et qui est équipé d'une roue détectrice destinée à s'enfoncer dans les rainures longitudinales d'une bande de trottoir roulant ou de marches d'escaliers roulants, le diamètre de la roue détectrice étant au moins égal à celui de la roue de roulement, la roue détectrice étant constituée d'un moyeu mobile verticalement et d'une bague de roulement qui est montée mobile en rotation sur le moyeu à l'aide d'un palier à rouleaux, et la roue détectrice étant pressée en permanence contre le sol par un moyen de ressort de compression, l'enfoncement de la roue détectrice dans les rainures longitudinales produisant un blocage automatique de la roue de roulement par crantage de la roue détectrice avec la roue de roulement, **caractérisé** en ce que le moyen de ressort de compression (32) est disposé à distance latérale du palier à rouleaux (29) de la roue détectrice (31).

2. Ensemble de roulement selon la revendication 1, **caractérisé** en ce que le palier à rouleaux (29) consiste en un roulement rainuré à billes rendu hermétique des deux côtés.

3. Ensemble de roulement selon la revendication 1 ou 2, **caractérisé** en ce que la roue de roulement (8) est montée sur un coussinet de palier (15) qui est disposé bloqué en rotation sur l'axe de roue (5), et le coussinet de palier (15) présente des faces de guidage verticales (16), qui sont prévues pour le guidage en déplacement vertical du moyeu (20).

4. Ensemble de roulement selon l'une des revendications 1 à 3, **caractérisé** en ce que l'axe de roue (5) présente au moins deux faces verticales pour recevoir bloqués en rotation le coussinet de palier (15) et le moyeu (20).

5. Ensemble de roulement selon l'une des revendications 1 à 4, **caractérisé** en ce que l'axe de roue (5) possède une section carrée.

6. Ensemble de roulement selon l'une des revendications 1 à 5, **caractérisé** en ce que le coussinet de palier (15) est monté en position fixe sur l'axe de roue (5) entre une branche de fourche (3) et une butée (7) qui se trouve sur l'axe de roue (5).

7. Ensemble de roulement selon l'une des revendications 1 à 6, **caractérisé** en ce que le corps de roue (9) de la roue de roulement (8) présente un évidement cylindrique (11) pour recevoir une partie du coussinet de palier (15) et du moyeu (20).

8. Ensemble de roulement selon l'une des revendications 1 à 7, **caractérisé** en ce que le moyen de ressort de compression (32) se trouve entre la roue de roulement (8) et la bague de roulement (30).

9. Ensemble de roulement selon l'une des revendications 1 à 8, **caractérisé** en ce que le moyen de ressort de compression (32) est monté sur un tenon (27) disposé sur le moyeu (20).

10. Ensemble de roulement selon l'une des revendications 1 à 9, **caractérisé** en ce que le moyen de ressort de compression (32) s'appuie directement sur l'axe de roue (5).

11. Ensemble de roulement selon l'une des revendications 1 à 10, **caractérisé** en ce que des faces d'application verticales (22) sont prévues sur le moyeu (20), qui sont destinées à s'appliquer contre les faces de guidage (16) du coussinet de palier (15).

12. Ensemble de roulement selon la revendication 11, **caractérisé** en ce que les faces d'application (22) prévues sur le moyeu (20) font partie d'une rainure (21).

13. Ensemble de roulement selon la revendication 1 ou 2, **caractérisé** en ce que le moyeu (20) est, d'une manière en soi connue, guidée en déplacement vertical par engagement dans un ajour présent sur la branche de fourche (3).

Fig.1

**Fig. 2**

Fig.3

Fig.4

Fig.5

Fig.6

Fig.7